# EUROPÄISCHE PATENTSCHRIFT

(11) **EP 3 438 774 B1**
(45) Veröffentlichungstag und Bekanntmachung des Hinweises auf die Patenterteilung: **29.09.2021**
(21) Anmeldenummer: 17184444.2
(22) Anmeldetag: 02.08.2017
(51) Int. Cl.: G05B 19/418

(54) **VERFAHREN ZUR BEREITSTELLUNG VON FUNKTIONEN INNERHALB EINES INDUSTRIELLEN AUTOMATISIERUNGSSYSTEMS UND AUTOMATISIERUNGSSYSTEM**
METHOD FOR PROVIDING FUNCTIONS WITHIN AN INDUSTRIAL AUTOMATION SYSTEM AND AUTOMATION SYSTEM
PROCÉDÉ PERMETTANT LA MISE À DISPOSITION DE FONCTIONS AU SEIN D'UN SYSTÈME D'AUTOMATISATION INDUSTRIEL ET SYSTÈME D'AUTOMATISATION INDUSTRIEL

(43) Veröffentlichungstag der Anmeldung: 06.02.2019
(73) Patentinhaber: Siemens Aktiengesellschaft, 80333 München (DE)
(72) Erfinder: Eckl, Roland, 91301 Forchheim (DE); Herberth, Harald, 90522 Oberasbach (DE)

(56) Entgegenhaltungen:
- EP-A1- 2 902 857
- US-A1- 2014 330 542

## Beschreibung

Die Erfindung betrifft ein Verfahren zur Bereitstellung von Funktionen innerhalb eines industriellen Automatisierungssystems. Die Erfindung betrifft ferner ein Computerprogrammprodukt. Weiter betrifft die Erfindung ein industrielles Automatisierungssystem.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

In einem industriellen Automatisierungssystem kann eine Vielzahl an Steuerungseinheiten, auch PLC (Programmable Logic Controller) genannt, zum Einsatz kommen. Jede Steuerungseinheit bietet in der Regel eine Schnittstelle, über die auf die jeweilige Steuerungseinheit zugegriffen werden kann. Über die Schnittstelle kann eine Vielzahl an unterschiedlichen Informationen abgefragt werden, wie z.B. ein aktueller Status der Steuerungseinheit, Konfigurationsdaten der Steuerungseinheit, System- und Nutzer-Variablen, Diagnose-Informationen (wie Traces, Alarme, Logs ...) oder ein Backup einer aktuellen Konfiguration der Steuerungseinheit. Über die Schnittstelle ist es teilweise möglich, Daten nicht nur einzusehen, sondern auf diese zuzugreifen und zu verändern.

Auf der Steuerungseinheit ist hierzu eine Web-Anwendung installiert, welche den Zugriff über http oder https ermöglicht. Dazu können beispielsweise in der Steuerungseinheit einzelne Webseiten in einem Speicher hinterlegt sein, die die Anbindung an die oben genannten Daten und/oder Zustände der Steuerungseinheit ermöglichen. Zur Laufzeit werden die Informationen Steuerungseinheit-seitig jeweils beim Aufruf der jeweiligen Webseite aufgelöst und in diese integriert. Dann wird die Webseite an einen Web-Client übertragen. Für jede Anfrage seitens eines Web-Clients wird damit eine Webseite erzeugt, die die angefragten Daten enthält.

Die Druckschrift EP 2 902 857 A1 zeigt beispielsweise ein Verfahren zur Bereitstellung von Funktionen innerhalb eines industriellen Automatisierungssystems, durch eine Webanwendung, die Clientseitig während des Steuerungsprogrammablaufs als Web-Client bereit gestellt werden.

Auch aus der US 2014/0330542 A1 ist ein ähnliches Vorgehen im industriellen Umfeld beschrieben.

Ein Problem dieser Vorgehensweise besteht darin, dass die Web-Anwendung eine sehr hohe Komplexität aufweist. Darüber hinaus muss für jeden unterschiedlichen Typ einer Steuerungseinheit eine jeweilige Anzahl an Webseiten mit darin integrierten Daten vorgesehen werden. Weiterhin von Nachteil ist, dass das Aktualisieren der Daten auf den Webseiten das erneute Laden der betreffenden Webseite erfordert. Dies erfolgt wahlweise automatisch beim Aufruf einer Webseite, beispielsweise beim Navigieren durch mehrere Seiten, indem durch einen Anwender das neue Laden explizit angestoßen wird. Alternativ kann eine Aktualisierung in festen Intervallen, z.B. alle fünf Sekunden, erfolgen. Im Ergebnis wird hierdurch eine hohe Rechenlast für die Web-Anwendung erzeugt. Aus Sicht des Anwenders ergibt sich eine schlechte Reaktionszeit.

Als Single-Page-Web-Anwendung (englisch: Single-Page Application, SPA) wird eine Web-Anwendung bezeichnet, die aus einem einzigen HTML-Dokument besteht und deren Inhalte dynamisch nachgeladen werden. Bei einer Single-Page-Web-Anwendung braucht ein Anwender nicht mehr zwischen einzelnen Webseiten wechseln. Stattdessen führen Interaktionen mit der Web-Anwendung in einem Client-seitigen Endgerät zu einer Kommunikation im Hintergrund, welche dynamisch weitere Anteile der Single-Webseite nachlädt. Dabei können Daten auch über verschiedene proprietäre Schnittstellen nachgeladen werden.

Der vorliegenden Erfindung liegt die Aufgabe zugrunde, ein Verfahren zur flexibleren Bereitstellung von Funktionen innerhalb eines industriellen Automatisierungssystems zu schaffen, welches die oben genannten Nachteile nicht aufweist, sowie eine geeignete technische Realisierung des Verfahrens anzugeben.

Diese Aufgabe wird erfindungsgemäß durch ein Verfahren gemäß den Merkmalen des Anspruchs 1 und ein industrielles Automatisierungssystem gemäß den Merkmalen des Anspruchs 10 gelöst. Vorteilhafte Weiterbildungen der vorliegenden Erfindung sind in den abhängigen Ansprüchen angegeben.

Entsprechend dem erfindungsgemäßen Verfahren werden Funktionen des Automatisierungssystems durch eine Web-Anwendung einer Steuerungseinheit verfügbar gemacht, die Client-seitig während eines Steuerungsprogrammablaufs über eine Single-Page-Web-Anwendung als Web-Client an einer Client-seitigen Benutzerschnittstelle bereitgestellt werden. Die Funktionen werden von einem standardisierten Datenmodell der Web-Anwendung, das die zumindest eine Steuerungseinheit und von diesen bereitstellbare Daten repräsentiert, bereitgestellt. Auf das standardisierte Datenmodell wird über eine generische Datenschnittstelle der Web-Anwendung zugegriffen. Dabei wird von dem Web-Client aus über die Datenschnittstelle auf die Struktur des Datenmodells zugegriffen, um eine Teilmenge einer Obermenge aller Funktionen einer Mehrzahl von unterschiedlichen Steuerungseinheiten aus dem Datenmodell zu extrahieren und an der Client-seitigen Benutzerschnittstelle bereitzustellen.

Das Verfahren ermöglicht eine strikte Trennung in statische Ressourcen und generische Datenschnittstelle. Dadurch braucht nur ein Web-Client für verschiedene Varianten einer Steuerungseinheit bereitgestellt werden. Stehen bei einer bestimmten Variante einer Steuerungseinheit bestimmte Funktionalitäten nicht zur Verfügung, so werden diese nicht in dem Web-Client zur Visualisierung und Auswahl angeboten.

Ein weiterer Vorteil ergibt sich dadurch, dass die Entwicklung des Web-Clients und die Entwicklung der Web-Anwendung strikt getrennt werden können. Dadurch ist es möglich, die Web-Anwendung im Hinblick auf eine optimale Datenintegration zu optimieren. Hieraus ergibt sich ein verringerter Testaufwand, da ein jeweiliger Web-Client lediglich gegen die generische Datenschnittstelle und das standardisierte Datenmodell implementiert zu werden braucht, welche für alle Steuerungseinheiten eines bestimmten Typs von Steuerungseinheit identisch sein kann. Anstelle der Verwendung einer konkreten Steuerungseinheit kann beispielsweise ein Simulator genutzt werden. Auf Seiten der Web-Anwendung müssen nur diese Schnittstelle und der Zugriff auf das generische Datenmodell getestet werden. Ein Test kann somit unabhängig von einer Benutzerschnittstelle erfolgen. Dadurch ergibt sich auch die Möglichkeit die Web-Anwendung und den Web-Client unabhängig voneinander bereitstellen oder aktualisieren zu können. Ferner wird eine einfachere Integration von Benutzerschnittstellen in die verschiedenen Web-Anwendungen ermöglicht.

Nach dem initialen Laden des Web-Clients tritt in der Web-Anwendung eine im Vergleich zum Stand der Technik geringere Last auf, da lediglich noch Datenstrukturen ausgeliefert werden. Insbesondere ist keine Integration von Daten in Webseiten auf der Web-Anwendung erforderlich. Die Anwendung selbst erfolgt ausschließlich durch das Laden statischer Ressourcen.

Anwender-spezifische Applikationen können einfacher realisiert werden, indem statische Ressourcen, welche den Web-Client bilden, auf dem Web-Server hinterlegt werden.

Gemäß einer vorteilhaften Ausgestaltung weist das Datenmodell einen hierarchisch strukturierten Aufbau mit Knoten, die in einer vorgegebenen Beziehungen zueinander stehen, auf. Besonders zweckmäßig ist es, wenn das Datenmodell einen baumartig strukturierten Aufbau aufweist. Hierdurch ist es besonders einfach möglich, das standardisierte Datenmodell zu realisieren und auf dieses über die generische Datenschnittstelle zuzugreifen.

Gemäß einer weiteren zweckmäßigen Ausgestaltung ist eine bestimmte Information über die Steuerungseinheit oder ein von diesem bereitstellbares Datum in dem Datenmodell bei jeder Abfrage einer beliebigen Steuerungseinheit an derselben Stelle in der hierarchischen Struktur zu finden. Die generische Datenschnittstelle erlaubt den Zugriff auf das hierarchische, vorzugsweise baumartig strukturierte Datenmodell. Hierbei kann durch die Hierarchie navigiert werden, um das Vorhandensein oder Fehlen von (Teil-)Elementen erkennen zu können. Demgegenüber repräsentiert das standardisierte Datenmodell die Zustände und die Daten der Steuerungseinheit. Bestimmte Informationen über die Steuerungseinheit und die von ihr bereitgestellten Daten sind dabei stets an derselben Stelle bzw. unter demselben Pfad vorzufinden. Dies erleichtert die Navigation, unabhängig von dem Typ der verwendeten Steuerungseinheit.

Das Datenmodell umfasst gemäß einer zweckmäßigen Ausgestaltung statische Daten und/oder dynamische Daten. Statische Daten sind z.B. die Steuerungseinheit kennzeichnende Daten, wie z.B. eine Firmware-Information und dergleichen. Dynamische Daten umfassen Statusdaten, Traces, Alarme (allgemein: Diagnose-Daten), Anwenderdaten oder Prozessdaten (Messdaten).

Erfindungsgemäß wird von dem Web-Client aus über die Datenschnittstelle auf die Struktur des Datenmodells zugegriffen, um eine Teilmenge einer Obermenge aller Funktionen einer Mehrzahl von unterschiedlichen Steuerungseinheiten aus dem Modell zu extrahieren und an der Client-seitigen Benutzerschnittstelle bereitzustellen. Mit anderen Worten wird dadurch ein Browsen innerhalb der Datenstruktur ermöglicht. Durch dieses Browsen oder Navigieren kann das Vorhandensein oder Fehlen von (Teil-)Elementen ermittelt werden. Im Zuge der Navigation oder des Vorgangs des Browsens können Elemente der Datenstruktur erzeugt oder entfernt werden. Alternativ oder zusätzlich können Elemente der Datenstruktur gelesen oder beschrieben werden. Ferner lässt sich auch ein Subscribe-Mechanismus realisieren, der es erlaubt über Änderungen an bestimmten Elementen des Datenmodells notifiziert zu werden. Ferner kann nicht nur eine Navigation in dem Datenmodell erlaubt sein, sondern auch weitere Verfahren der auslesbaren Selbstbeschreibung der Fähigkeiten der Steuerungseinheit.

Es ist in diesem Zusammenhang zweckmäßig, wenn die Single-Page-Web-Anwendung nur diejenigen Daten an der Client-seitigen Benutzerschnittstelle bereitstellt, welche in der Untermenge enthalten sind. Hierdurch wird sichergestellt, dass die Steuerungseinheit nur diejenigen Daten darstellt, die sie aufgrund ihrer Fähigkeiten verarbeiten kann. Nicht verarbeitbare Informationen werden entweder nicht angezeigt oder z.B. ausgegraut.

Es ist weiterhin zweckmäßig, wenn die Single-Page-Web-Anwendung als statische Ressource von der Web-Anwendung oder einer anderen Anwendung oder einem zentralen Rechner von dem Web-Client geladen und ausgeführt wird. Eine mobile App oder eine Client-Anwendung kann als Alternative zur Single-Page-Web-Anwendung genutzt werden, die anstelle der Single-Page-Web-Anwendung verwendet wird, wenn der Web-Client auf einem mobilen Gerät, wie z.B. einem Tablet-PC und dergleichen, abläuft.

Es kann weiterhin zweckmäßig sein, wenn die Ausführung der Single-Page-Web-Anwendung in einer Bedien- und Beobachtungsstation erfolgt.

Es wird weiterhin ein Computerprogrammprodukt vorgeschlagen, das direkt in den internen Speicher eines digitalen Rechners, insbesondere eine Recheneinheit der Steuerungseinheit, geladen werden kann und Softwarecodeabschnitte umfasst, mit denen die Schritte gemäß den hierin beschriebenen Verfahren ausgeführt werden, wenn das Produkt auf dem Rechner läuft.

Das erfindungsgemäße industrielle Automatisierungssystem umfasst zumindest eine Steuerungseinheit und eine Bedien- und Beobachtungsstation. Die zumindest eine Steuerungseinheit umfasst zumindest einen Web-Server zur Bereitstellung von Automatisierungsfunktionen als Web-Anwendung, wobei die Web-Anwendung ein standardisiertes Datenmodell, das die zumindest eine Steuerungseinheit und von diesem bereitstellbare Daten repräsentiert, und eine generische Datenschnittstelle umfasst, die den Zugriff auf den von der Steuerungseinheit bereitstellbaren Daten über das standardisierte Datenmodell gestattet. Die Bedien- und Beobachtungsstation umfasst einen Web-Client zur Client-seitigen Ausführung einer Single-Page-Web-Anwendung während eines Steuerungsprogrammablaufs an einer Client-seitigen Benutzerschnittstelle, wobei der Web-Client eine Obermenge aller Funktionen einer Mehrzahl von unterschiedlichen Typen von Steuerungseinheiten umfasst und über die generische Datenschnittstelle auf das standardisierte Datenmodell zugreift. Dabei wird von dem Web-Client aus über die Datenschnittstelle auf die Struktur des Datenmodells zugegriffen, um eine Teilmenge einer Obermenge aller Funktionen einer Mehrzahl von unterschiedlichen Steuerungseinheiten aus dem Datenmodell zu extrahieren und an der Client-seitigen Benutzerschnittstelle bereitzustellen.

Das erfindungsgemäße industrielle Automatisierungssystem weist die gleichen Vorteile auf, wie diese vorstehend in Verbindung mit dem erfindungsgemäßen Verfahren beschrieben wurden.

Darüber hinaus kann das erfindungsgemäße industrielle Automatisierungssystem weitere Merkmale umfassen, welche die Ausführung des erfindungsgemäßen Verfahrens ermöglichen.

Die vorliegende Erfindung wird nachfolgend an einem Ausführungsbeispiel anhand der Zeichnung näher erläutert. Es zeigen:
- Fig. 1: eine schematische Darstellung eines industriellen Automatisierungssystems zur Bereitstellung von Funktionen; und
- Fig. 2: eine schematische Darstellung der Repräsentation eines im Rahmen des erfindungsgemäßen Verfahrens genutzten standardisierten Datenmodells.

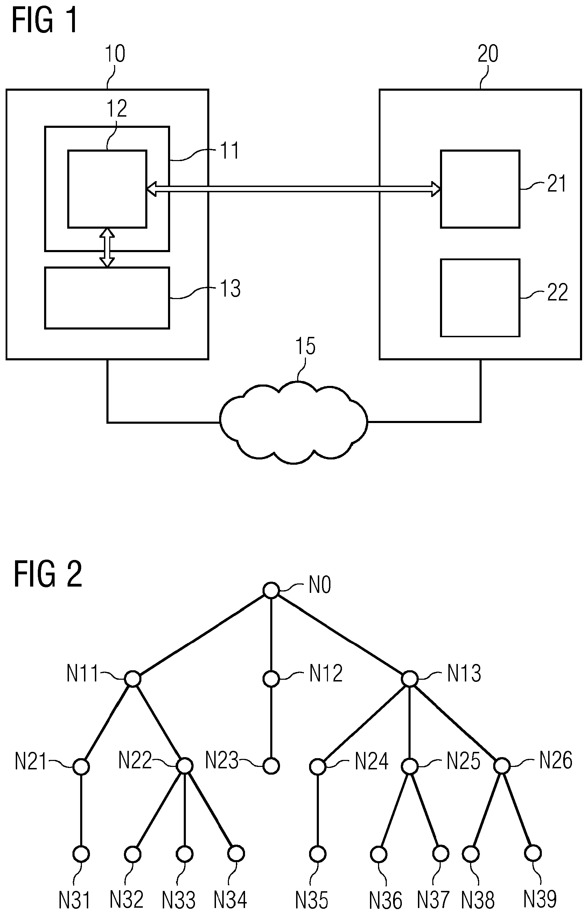

Das in Fig. 1 dargestellte industrielle Automatisierungssystem umfasst beispielhaft lediglich eine Steuerungseinheit 10, die einen Web-Server 11 zur Bereitstellung von Automatisierungsfunktionen als Web-Anwendungen umfasst. Die Anzahl der Steuerungseinheiten in einem industriellen Automatisierungssystem kann entgegen der vereinfachten Darstellung in Fig. 1 sehr viel größer sein. Der Aufbau der dann mehreren Steuerungseinheiten ist dabei identisch zu der hier getroffenen Beschreibung. Die Steuerungseinheit 10 ist über ein Kommunikationsnetz 15 mit zumindest einer Bedien- und Beobachtungsstation 20 verbunden, die einen Web-Client 21 zur Client-seitigen Verknüpfung von Web-Anwendungen zur Laufzeit an einer Client-seitigen Benutzerschnittstelle 22 aufweist. Die Client-seitige Benutzerschnittstelle 22 umfasst im vorliegenden Ausführungsbeispiel einen Web-Browser. Die Bedien- und Beobachtungsstation 20 kann ein stationärer Rechner oder ein mobiler Rechner (z.B. Laptop, Tablet-PC und dergleichen) sein.

Der Web-Client ermöglicht die Ausführung einer Single-Page-Web-Anwendung (SPA), welche die Obermenge (sog. Superset) aller Funktionen verschiedenster Typen von Steuerungseinheiten 10 beherrscht, die über eine Schnittstelle der Steuerungseinheit 10 im Web-Browser 22 verfügbar sein sollen.

Der Web-Server 11 umfasst dazu eine generische Schnittstelle 12, welche den Zugriff auf ein hierarchisches, vorzugsweise baumartig strukturiertes Datenmodell 13 erlaubt. Eine mögliche Repräsentation des Datenmodells 13 ist in Fig. 2 dargestellt. Das Datenmodell umfasst einen Wurzelknoten N0, beispielhaft drei Knoten N11-N13 einer ersten Hierarchieebene, beispielhaft sechs Knoten N21-N26 einer zweiten Hierarchieebene und beispielhaft neun Knoten N31-N39 einer dritten Hierarchieebene. Die Knoten jeweils benachbarter Hierarchieebenen sind, soweit das Datenmodell dies vorsieht, über Kanten miteinander verbunden, um Beziehungen der einzelnen Knoten zueinander festzulegen. Anhand einer derartigen, lediglich beispielhaften Strukturierung des Datenmodells ist es möglich, eine jeweilige Steuerungseinheit 10 und die von dieser bereitstellbaren Daten zu repräsentieren. Ein wie in Fig. 2 gezeigtes strukturiertes Datenmodell 13 erlaubt es mit Hilfe der generischen Datenschnittstelle 12 durch die Hierarchie zu navigieren, um das Vorhandensein oder Fehlen von (Teil-)Elementen des Datenmodells erkennen zu können. Elemente der Datenstruktur können dabei z.B. über den Web-Browser erzeugt, entfernt, gelesen und/oder beschrieben werden.

Das standardisierte Datenmodell repräsentiert eine jeweilige Steuerungseinheit 10, seine Zustände und die von der Steuerungseinheit bereitstellbaren Daten. Bestimmte Informationen über die Steuerungseinheit und die von ihr bereitstellbaren Daten sind dabei stets an demselben Knoten, welcher unter einem bestimmten Pfad auffindbar ist, vorzufinden.

Der Web-Server 12 ist dazu eingerichtet, sowohl statische Ressourcen an den Web-Browser auszuliefern als auch die generische Datenschnittstelle zu realisieren und mittels dieser den Zugriff auf das standardisierte Datenmodell 13 zu ermöglichen.

Der Web-Client 21 ist zunächst in einem Speicher der Steuerungseinheit 10 als statische Ressource hinterlegt. Der Web-Client 21 wird über den Web-Server 11 verfügbar gemacht. Statische Ressourcen umfassen insbesondere HTML-, CSS-, JavaScript-Code, Texte, Graphiken und vergleichbare Dateien. Der Web-Client 21 kann als statische Ressource von einer von dem Web-Server unterschiedliche Institution bereitgestellt sein. Der Web-Client 21 kann als Teil einer Firmware der Steuerungseinheit 10 ausgeliefert werden oder individuell aktualisiert werden, ohne dabei die gesamte Firmware (d.h. das Firmware-Image) der Steuerungseinheit 10 zu ersetzen. Die statische Ressource, d.h. der Web-Client, kann derart konfiguriert werden, dass sie von einem in den Figuren nicht gezeigten, zentral vorgesehenen Server geladen wird, wobei immer eine aktuelle Version des Web-Clients bereitstellbar ist, ohne dass hierzu ihre Firmware oder Projektierung geändert werden müsste.

Über eine Einsprungs-Webseite des Web-Clients 21 wird z.B. HTML-Code geladen, der wiederum auf JavaScript-Code verweist. Die Ausführung des Web-Clients 21 und des zugehörigen JavaScript-Codes erfolgt dabei ausschließlich Client-seitig in dem Web-Browser 22 der Bedien- und Beobachtungsstation 20. Der Web-Client 20 lädt bei Bedarf statische Ressourcen, wie z.B. Graphiken und lokalisierte Texte oder auch weiteren JavaScript-Code für weitere Funktionalität, nach, welche vorab bereits abgelegt wurden.

Ein Refresh oder ein erneutes Laden der Webseite des Web-Clients ist explizit nicht erforderlich. Auf dem Web-Server 11 der Steuerungseinheit 10 wird demgegenüber kein Anwendungs-Code ausgeführt, um Ressourcen dynamisch zu erzeugen.

Der Web-Client 21 stellt den allgemeinen Rahmen der Anwendung dar. Der Web-Client 21 greift für Inhalte und Information zur jeweiligen Steuerungseinheit 10 und deren aktuellen Daten ausschließlich über die generische Schnittstelle 12 auf das zugrundeliegende standardisierte Datenmodell 13 zu. Das standardisierte Datenmodell 13 umfasst sowohl statische/unveränderte Informationen, wie z.B. Informationen über die Steuerungseinheit 10, eine Seriennummer, einen Typ, eine Firmware-Version und so weiter. Das generische Datenmodell 13 umfasst auch solche Informationen, die sich nur mit einer Projektierung verändern, wie z.B. angeschlossene Peripherie, Topologie, in die die Steuerungseinheit eingebunden wurde, und so weiter. Darüber hinaus umfasst das Datenmodell 13 auch dynamische Daten, wie z.B. einen Status der Steuerungseinheit oder über die Schnittstelle der Steuerungseinheit von Peripheriegeräten oder Diagnosepuffern erhaltene Daten, Traces, Alarme, System- und Anwender-Variablen, Watchtables und dergleichen.

Durch das Navigieren durch das Datenmodell 13 wird dem Web-Client 21 eine Erfassung der von dem Web-Server 11 der Steuerungseinheit 10 bereitgestellten Daten ermöglicht. Sind z.B. Elemente über Alarm-Informationen in dem standardisierten Datenmodell 13 enthalten, so wird in dem Web-Client 21 ein Menü-Eintrag für einen Alarm vorgesehen und ein Zugriff auf diesen Teil-Aspekt ermöglicht.

Während der Web-Client 21 somit mehr Funktionalität in der Benutzerschnittstelle des Web-Browsers 22 berücksichtigen kann, wird jedoch nur diejenige Funktionalität freigegeben, welche in dem standardisierten Datenmodell 13 auf der jeweils tatsächlich zugeordneten Steuerungseinheit 10 vorhanden ist. Zweckmäßigerweise deckt der Web-Client 21 also stets den vollen Funktionsumfang sämtlicher Typen von Steuerungseinheiten 10 ab, für die sie geschrieben wurde. In Abhängigkeit der tatsächlich vorhandenen Funktionalitäten der Steuerungseinheit 10, werden jedoch, wie beschrieben, nur diejenigen funktionalen Aspekte visualisiert und zur Auswahl freigegeben, welche in dem standardisierten Datenmodell 13 vorhanden sind.

Die Datenschnittstelle zwischen dem Web-Client 21 und dem Web-Server 11 kann an das OPC-UA-Zugriffsmodell angelehnt sein. Ebenso kann das standardisierte Datenmodell 13 in seinem Aufbau ebenfalls an ein Modell eines OPC-UA-Companion-Dokuments (z.B. "OPC-UA for Devices") angelehnt sein. Dies ermöglicht es unter Umständen dasselbe Modell über verschiedene Zugriffswege auf vergleichbare Weise zu adressieren. So kann beispielsweise von einem OPC-Client aus über einen integrierten OPC-Server als auch von einem Web-Browser aus über den Web-Server mit HTTP und JSON zugegriffen werden. Dem Ersteller einer Applikation ist somit unabhängig von dem gewählten Zugriffsweg zumindest das zugrundeliegende Adressierungs- und Verwendungsmodell bekannt.

Der Nutzer der Bedien- und Beobachtungsstation 20 kann bei Offenlegung der Schnittstelle zwischen dem Web-Client 21 und dem Web-Server 11 sowie dem verwendeten standardisierten Datenmodell 13 auf einfache Weise an Informationen aus der Steuerungseinheit 10 gelangen. Insbesondere ist die Erstellung eigener Anwendungen auf einfache möglich, die als statische Ressourcen auf der Steuerungseinheit 10 abgelegt werden.

Alternativ zu dem Web-Client 21 kann beispielsweise auch eine mobile App als Client-Anwendung verwendet werden, die auf die Datenschnittstelle zu dem Web-Server 11 und dem unterlagerten standardisierten Datenmodell 13 zugreift.

## Patentansprüche

1. Verfahren zur Bereitstellung von Funktionen innerhalb eines industriellen Automatisierungssystems, bei dem
- Funktionen des Automatisierungssystems durch eine Web-Anwendung (11) zumindest einer Steuerungseinheit (10) verfügbar gemacht werden, die Client-seitig während eines Steuerungsprogrammablaufs als Web-Client (21) an einer Client-seitigen Benutzerschnittstelle (22) bereitgestellt werden;
- indem die Funktionen von einem standardisierten Datenmodell (13) der Web-Anwendung (11), dass die zumindest eine Steuerungseinheit (10) und von diesem bereitstellbare Daten repräsentiert, bereitgestellt werden und
- auf das standardisierte Datenmodell (13) über eine generische Datenschnittstelle (12) der Web-Anwendung zugegriffen wird
**dadurch gekennzeichnet, dass**
die Webanwendung (11) Client-seitig eine Single-Page-Web-Anwendung ist und
von dem Web-Client (21) aus über die Datenschnittstelle (12) auf die Struktur des Datenmodells (13) zugegriffen wird, um eine Teilmenge einer Obermenge aller Funktionen einer Mehrzahl von unterschiedlichen Steuerungseinheiten (10) aus dem Datenmodell (13) zu extrahieren und an der Client-seitigen Benutzerschnittstelle (12) bereitzustellen.

2. Verfahren nach Anspruch 1, bei dem das Datenmodell (13) einen hierarchisch strukturierten Aufbau mit Knoten, die in einer vorgegebenen Beziehung zueinander stehen, aufweist.

3. Verfahren nach Anspruch 2, bei dem das Datenmodell (13) einen baumartig strukturierten Aufbau aufweist.

4. Verfahren nach Anspruch 2 oder 3, bei dem eine bestimmte Information über die Steuerungseinheit (10) oder ein von diesem bereitstellbares Datum in dem Datenmodell (13) bei jeder Abfrage einer beliebigen Steuerungseinheit (10) an derselben Stelle in der hierarchischen Struktur zu finden ist.

5. Verfahren nach einem der vorhergehenden Ansprüche, bei dem das Datenmodell (13) statische Daten und/oder dynamische Daten umfasst.

6. Verfahren nach einem der vorhergehenden Ansprüche, bei dem die Single-Page-Web-Anwendung nur diejenigen Daten an der Client-seitigen Benutzerschnittstelle (12) bereitstellt, welche in der Untermenge enthalten sind.

7. Verfahren nach einem der vorhergehenden Ansprüche, bei dem die Single-Page-Web-Anwendung als statische Ressource von der Web-Anwendung oder einer anderen Anwendung oder einem zentralen Rechner von dem Web-Client (21) geladen und ausgeführt wird.

8. Verfahren nach einem der vorhergehenden Ansprüche, bei dem die Ausführung der Single-Page-Web-Anwendung ausschließlich Client-seitig in einer Bedien- und Beobachtungsstation (20) erfolgt.

9. Computerprogrammprodukt, das direkt in den internen Speicher eines digitalen Rechners geladen werden kann und Softwarecodeabschnitte umfasst, mit denen die Schritte gemäß einem der vorhergehenden Ansprüche ausgeführt werden, wenn das Produkt auf dem Rechner läuft.

10. Industrielles Automatisierungssystem, umfassend:
- zumindest eine Steuerungseinheit (10), die zumindest einen Web-Server zur Bereitstellung von Automatisierungsfunktionen als Web-Anwendung (11) umfasst, wobei die Web-Anwendung (11) ein standardisiertes Datenmodell (13), das die zumindest eine Steuerungseinheit (10) und von diesem bereitstellbare Daten repräsentiert, und eine generische Datenschnittstelle (12) umfasst, die den Zugriff auf die von der Steuerungseinheit (10) bereitstellbaren Daten über das standardisierte Datenmodell (13) gestattet, umfasst;
- eine Bedien- und Beobachtungsstation (20), die einen Web-Client (21) zur Client-seitigen Ausführung einer Single-Page-Web-Anwendung während eines Steuerungsprogrammablaufs an einer Client-seitigen Benutzerschnittstelle (22) umfasst, wobei der Web-Client (21) eine Obermenge aller Funktionen einer Mehrzahl von Steuerungseinheiten (10) umfasst und über die generische Datenschnittstelle (12) auf das standardisierte Datenmodell (13) zugreift, und
- von dem Web-Client (21) aus über die Datenschnittstelle (12) auf die Struktur des Datenmodells (13) zugegriffen wird, um eine Teilmenge einer Obermenge aller Funktionen einer Mehrzahl von unterschiedlichen Steuerungseinheiten (10) aus dem Datenmodell (13) zu extrahieren und an der Client-seitigen Benutzerschnittstelle (12) bereitzustellen.

## Claims

1. Method for providing functions within an industrial automation system, in which
- functions of the automation system are made available by a web application (11) of at least one control unit (10), said functions being provided on the client side during a control program run as a web client (21) at a user interface (22) on the client side;
- the functions are provided by a standardized data model (13) of the web application (11) which represents the at least one control unit (10) and data providable by the latter;
- the standardized data model (13) is accessed via a generic data interface (12) of the web application,
**characterized in that**
the web application is a single-page application on the client side, and
the structure of the data model (13) is accessed from the web client (21) via the data interface (12) in order to extract a subset of a superset of all functions of a plurality of different control units (10) from the data model (13) and provide it at the user interface (12) on the client side.

2. Method according to Claim 1, in which the data model (13) is designed as a hierarchical structure with nodes which relate to one another in a predefined manner.

3. Method according to Claim 2, in which the data model (13) is designed as a tree-like structure.

4. Method according to Claim 2 or 3, in which a specific information element relating to the control unit (10) or a datum providable by the latter can be found in the data model (13) at the same place in the hierarchical structure during each interrogation of any given control unit (10).

5. Method according to one of the preceding claims, in which the data model (13) comprises static data and/or dynamic data.

6. Method according to one of the preceding claims, in which the single-page application provides only the data contained in the subset at the user interface (12) on the client side.

7. Method according to one of the preceding claims, in which the single-page application is loaded and executed by the web client (21) as a static resource from the web application or from a different application or from a central computer.

8. Method according to one of the preceding claims, in which the single-page application is executed entirely on the client side in an operating and monitoring station (20).

9. Computer program product which can be loaded directly into the internal memory of a digital computer and which comprises software code segments with which the steps according to one of the preceding claims are carried out when the product runs on the computer.

10. Industrial automation system, comprising:
- at least one control unit (10) which comprises at least one web server to provide automation functions as a web application (11), wherein the web application (11) comprises a standardized data model (13) which represents the at least one control unit (10) and data providable by the latter, and a generic data interface (12) which allows access to the data providable by the control unit (10) via the standardized data model (13);
- an operating and monitoring station (20) which comprises a web client (21) for the execution on the client side of a single-page application during a control program run at a user interface (22) on the client side, wherein the web client (21) comprises a superset of all functions of a plurality of control units (10) and accesses the standardized data model (13) via the generic data interface (12), and
- the structure of the data model (13) is accessed from the web client (21) via the data interface (12) in order to extract a subset of a superset of all functions of a plurality of different control units (10) from the data model (13) and provide it at the user interface (12) on the client side.

## Revendications

1. Procédé de mise à disposition de fonctions à l'intérieur d'un système d'automatisation industriel, dans lequel
- des fonctions du système d'automatisation sont mis à disposition par une application web (11) d'au moins une unité de commande (10), qui est mise à disposition côté client pendant une exécution d'un programme de commande en tant que client web (21) sur une interface utilisateur côté client (22) ;
- les fonctions sont mises à disposition par un modèle de données standardisé (13) de l'application web (11), qui représente l'au moins une unité de commande (10) et les données mises à disposition par celui-ci et
- on accède au modèle de données standardisé (13) par l'intermédiaire d'une interface de données générique (12) de l'application web
**caractérisé en ce que**
l'application web (11) côté client est une application web à page unique et
on accède, à partir du client web (21), par l'intermédiaire de l'interface de données (12), à la structure du modèle de données (13), afin d'extraire du modèle de données (13) un sous-ensemble d'un ensemble supérieur de toutes les fonctions d'une pluralité d'unités de commande (10) différentes et de les mettre à disposition au niveau de l'interface utilisateur côté client (12) .

2. Procédé selon la revendication 1, dans lequel le modèle de données (13) présente une structure hiérarchique avec des nœuds qui présentent entre eux une relation prédéterminée.

3. Procédé selon la revendication 2, dans lequel le modèle de données (13) présente une structure arborescente.

4. Procédé selon la revendication 2 ou 3, dans lequel une information déterminée peut être trouvée au même endroit dans la structure hiérarchique par l'intermédiaire de l'unité de commande (10) ou d'une donnée pouvant être mise à disposition par celle-ci dans le modèle de données (13) à chaque requête d'une unité de commande (10) quelconque.

5. Procédé selon l'une des revendications précédentes, dans lequel le modèle de données (13) comprend des données statiques et/ou des données dynamiques.

6. Procédé selon l'une des revendications précédentes, dans lequel l'application web à page unique ne met à disposition sur l'interface utilisateur côté client (12) que les données qui sont contenues dans le sous-ensemble.

7. Procédé selon l'une des revendications précédentes, dans lequel l'application web à page unique est chargée et exécutée par le client web (21) en tant que ressource statique de l'application web ou d'une autre application ou d'un ordinateur central.

8. Procédé selon l'une des revendications précédentes, dans lequel l'exécution de l'application web à page unique a lieu exclusivement côté client dans une station de commande et d'observation (20).

9. Produit de programme informatique qui peut être chargé directement dans la mémoire interne d'un ordinateur et qui comprend des portions de logiciel avec lesquelles les étapes selon l'une des revendications précédentes sont exécutées, lorsque le produit tourne sur l'ordinateur.

10. Système d'automatisation industriel comprenant :
- au moins une unité de commande (10), qui comprend au moins un serveur web pour la mise à disposition de fonctions d'automatisation en tant qu'application web (11), dans lequel l'application web (11) comprend un modèle de données standardisé (13), qui représente au moins une unité de commande (10) et des données pouvant être mises à disposition par celle-ci, et une interface de données générique (12), qui permet l'accès aux données pouvant être mises à disposition par l'unité de commande (10) par l'intermédiaire du modèle de données standardisé (13) ;
- une station de commande et d'observation (20), qui comprend un client web (21) pour l'exécution côté client d'une application web à page unique pendant le déroulement d'un programme de commande au niveau d'une interface utilisateur côté client (22), dans lequel le client web (21) comprend un ensemble supérieur de toutes les fonctions d'une pluralité d'unités de commande (10) et accède, par l'intermédiaire de l'interface de données générique (12), au modèle de données standardisé (13) et
- à partir du client web (21), on accède, par l'intermédiaire de l'interface de données (12), à la structure du modèle de données (13), afin d'extraire du modèle de données (13) un sous-ensemble d'un ensemble supérieur de toutes les fonctions d'une pluralité d'unités de commande (10) différentes et de les mettre à disposition au niveau de l'interface utilisateur côté client (12).
